# EUROPEAN PATENT APPLICATION

(11) **EP 1 229 671 A2**
(43) Date of publication of application: **07.08.2002**
(21) Application number: 02002631.6
(22) Date of filing: 05.02.2002
(51) Int. Cl.: H04B 7/26

(54) **Time slot allocating apparatus, time slot allocating method thereof, memories and programms, mobile communication system and operating method**

(30) Priority: 05.02.2001 JP 2001028806
(71) Applicant: NTT DoCoMo, Inc., Tokyo 100-6150 (JP)
(72) Inventor: Yamada, Mayu, Yokohama-shi, Kanagawa 236-0031 (JP); Futakata, Toshiyuki, Yokosuka-shi, Kanagawa 239-0842 (JP); Moon, Sung Uk, Yokosuka-shi, Kanagawa 238-0031 (JP)
(74) Representative: Grosse, Wolfgang, Dipl.-Ing.

(57) **Abstract**

Concerned is time slot allocation in the CDMA-TDD scheme. A time slot of an uplink (UL) is allocated to a mobile station MS1 in cell 1. At this time, a time slot of a downlink (DL) having the same time slot number as that of the foregoing time slot is allocated to a mobile station MS2 in an adjacent cell 2 without avoiding the allocation. If there can occur deterioration of communication quality a process of allocating another time slot or the like will be performed as in the case of a mobile station MS2-1.

## Description

### BACKGROUND OF THE INVENTION

### Field of the Invention

The present invention relates to time slot allocating apparatus, a time slot allocating method thereof, memories and programs, a mobile communication system and operating method, more particularly, to time slot allocating apparatus, a time slot allocating method thereof, memories and programs, a mobile communication system and operating method in a scheme applying a common frequency band to sending and receiving operations, for example, like the TDD (Time Division Duplex) scheme.

### Related Background Art

The TDD scheme is one of communication systems and is a scheme that substantiates two-way communications by allocating a common frequency to up and down links in time division. In the TDD scheme the same frequency band is used for sending and receiving operations. In the TDD scheme, since the same frequency is used for up and down links, the frequency selective fading can be predicted from received signals.

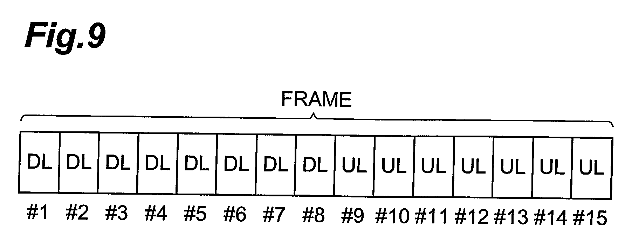

The TDD scheme is also commonly used, for example, in CDMA (Code Division Multiple Access) in the mobile communication field. Fig. 9 shows a configuration of an example of a frame in the IMT-2000 CDMA-TDD scheme. Conventionally, the number of time slots allocated to uplinks and downlinks, and positions thereof are preliminarily set respectively. In this example, the number of time slots is 15. The positions of the time slots are indicated by time slot numbers of #1 to #15. DL represents a time slot allocated to a downlink, and UL a time slot allocated to an uplink. In this example, there are eight DLs (downlinks) and seven ULs (uplinks), the time slots in the first half of the frame all are the DLs (downlinks), and the time slots in the second half all the ULs (uplinks). In this example there is one switching point between ULs and DLs, but there are also cases of two or more switching points. When an allocation request for a time slot arises, a vacant spreading code is allocated among spreading codes in the time slot in consideration of an interference level and others in the time slot.

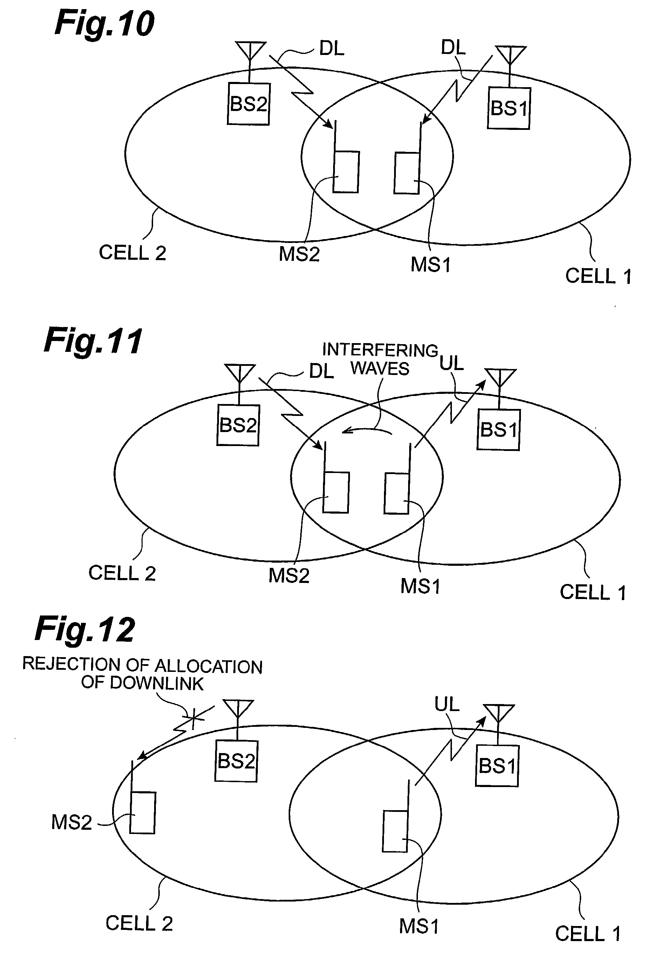

Fig. 10 is a diagram showing a conventional example of adjacent cell 1 and cell 2. In the cell 1, there are a base station BS1 for the cell 1, a time slot allocating unit for the cell 1, not shown, and a mobile station MS1 under communications with the base station BS1. On the other hand, in the cell 2 there are a base station BS2 for the cell 2, a time slot allocating unit for the cell 2, not shown, and a mobile station MS2 under communications with the base station BS2.

The frame configurations of cell 1 and cell 2 are identical with each other. Therefore, while the time slots of uplinks are used in the cell 1, the time slots of uplinks are also used in the cell 2; while the time slots of downlinks are used in the cell 1, the time slots of downlinks are also used in the cell 2. Namely, "the frame configurations are identical with each other" means that the number of time slots of uplinks and positions thereof, and the number of time slots of downlinks and positions thereof are identical between the frames. For example, the frame configurations of cell 1 and cell 2 both are the one as shown in Fig. 9.

In the identical frame configurations here, where there occurred a considerable difference between uplink traffic and downlink traffic, e.g., where the downlink traffic became extremely high in the cell 1, there arose the problem that even if there were vacant time slots of uplinks in the cell 1 they could not be allocated and thus the frequency utilization efficiency of the entire system could not be maximum. The system herein refers to a system consisting of a plurality of base stations under control of a certain radio network control device, or a system consisting of a plurality of base stations under control of plural radio network control devices.

Thus research is under way on Slow DCA (Dynamic Channel Allocation) which is a scheme capable of changing the numbers of time slots of uplinks and time slots of downlinks in the frame according to circumstances of traffic and others. In this scheme, frames of different configurations are used among adjacent cells.

Meanwhile, in use of frames of different configurations, where a common time slot number is allocated to a time slot of an uplink and a time slot of a downlink among adjacent cells, the power of interfering waves or the like can deteriorate the quality of the time slot, i.e., the quality of communications, so as to cause trouble in communications of the mobile station using the time slot. This will be described with reference to Fig. 11. Fig. 11 is a diagram showing an example where a common time slot number is allocated to an uplink and a downlink in adjacent cell 1 and cell 2. A time slot of an uplink is allocated to the mobile station MS1 under communications with the base station BS1 in the cell 1, and a time slot of a downlink to the mobile station MS2 under communications with the base station BS2 in the cell 2. The mobile station MS2 using the downlink is affected by interfering waves from the mobile station MS1 using the uplink. If the quality of communications is deteriorated by the power of the interfering waves or the like, there can occur trouble in the communications of the mobile station MS2. In the opposite case to this, not shown, i.e., in the case where a time slot of a downlink is allocated to the mobile station MS1 under communications with the base station BS1 and a time slot of an uplink to the mobile station MS2 under communications with the base station BS2, the same problem will arise. In this case, the mobile station MS1 using the downlink is affected by the interfering waves from the mobile station MS2 using the uplink. If the quality of communications is deteriorated by the power of the interfering waves or the like, there can occur trouble in the communications of the mobile station MS1.

### SUMMARY OF THE INVENTION

In order to avoid the foregoing problem of interfering waves, the practice heretofore was to avoid such allocation that when a time slot of an up(down)link is allocated to a mobile station in a certain cell, a time slot of a down(up)link having the same time slot number as that of the time slot is allocated to a mobile station in an adjacent cell.

However, there are cases where the mobile station MS2 issuing an allocation request of a time slot of a downlink is distant from the mobile station MS1 using a time slot of an uplink, as shown in Fig. 12. In such cases, there is no or little interference from the mobile station MS1 and it is possible for the mobile station MS2 to perform communications. Conventionally, in such cases, unused time slots were existent and thus frequencies were not utilized efficiently.

An object of the present invention is to provide time slot allocating apparatus, a time slot allocating method thereof, memories and programs, a mobile communication system and operating method.

The present invention provides time slot allocating apparatus in a scheme applying a common frequency band to up/downlinks and using the frequency band in a first area and a second area, the time slot allocating apparatus being located in the respective areas, the apparatus comprising:
means for, when in the first area and the second area either one link of the up/downlinks is allocated to a first mobile station in the first area, allocating the other link having a time slot number equal to that of a time slot allocated to the first mobile station and being different from the link of the first mobile station, to a second mobile station in the second area.

According to the present invention, the utilization efficiency of links can be enhanced in such a way that when a certain time slot is allocated to either one link of up/downlinks for the first mobile station, a time slot having the same time slot number as that of the allocated time slot is used for the other link in another area.

When the first time slot is a time slot of an uplink, the second time slot is a time slot of a downlink; when the first time slot is a time slot of a downlink, the second time slot is a time slot of an uplink. The first area and the second area are minimum units for allocation of time slots in the common frame, which refer, for example, to cells, micro cells, or sectors. The application of the common frequency band to sending and receiving operations refers, for example, to the TDD scheme. The scheme applying the common frequency band to sending and receiving operations and using the common frequency band in the first area and the second area adjacent to each other refers, for example, to the CDMA-TDD scheme. A specific means functioning as the time slot allocating means to the second mobile station can be, for example, a time slot management section in embodiments of the present invention.

In the present invention described above, the time slot allocating apparatus can be configured to further comprise:
means for accepting an allocation request to the second mobile station in the second area when either one of the up/downlinks is allocated to the first mobile station in the first area,
wherein allocating means to the second mobile station allocates the second time slot to the second mobile station, based on information of positions of the first mobile station and the second mobile station.

In this configuration, based on information of positions of the first mobile station and the second mobile station, the deterioration of the communication quality caused by interference with the first mobile station and the second mobile station is estimated and it is determined whether the second time slot is to be allocated to the second mobile station. That is, when the first mobile station is at the prescribed distance from the second mobile station, it is estimated that the interference level is low or there is no interference. Thus, in such cases the second time slot is allocated to the second mobile station. Against such cases, when the first mobile station is not at the prescribed distance from the second mobile station, it is estimated that the interference level is high. Thus, in this case the second time slot is not allocated to the second mobile station. When the interference level is high, the communication quality is deteriorated and the second time slot allocating is fruitless. For this reason, as the present invention, when it is estimated that the interference level is high, the second time slot is not allocated to the second mobile station.
Thus, the present invention can prevent fruitless allocation of the second time slot. A specific means functioning as the means for accepting the allocation request to the second mobile station can be, for example, the time slot management section in the embodiments of the invention. The means for performing the estimation of the interference level can be, for example, an interference estimation section in the embodiment of the invention.

Further, the above configurations can be applied to programs and memories storing the programs and further to a mobile communication system including the foregoing time slot allocating apparatus and operation of the system.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a diagram showing the whole of a mobile communication system according to the embodiments of the invention.
Fig. 2 is a plan view showing part of cells in the embodiments of the invention.
Fig. 3 is a configuration of an example of a frame allocated to one of adjacent cells in the embodiments of the invention.
Fig. 4 is a configuration of an example of a frame allocated to the other of the adjacent cells in the embodiments of the invention.
Fig. 5 is a block diagram of a time slot allocating unit in the first embodiment.
Fig. 6 is a flowchart to illustrate the operation of the time slot allocating unit in the first embodiment.
Fig. 7 is a block diagram of a time slot allocating unit in the second embodiment.
Fig. 8 is a flowchart to illustrate the operation of the time slot allocating unit in the second embodiment.
Fig. 9 is a configuration of an example of a frame in the conventional IMT-2000 CDMA-TDD scheme.
Fig. 10 is a diagram showing an example of conventional cells adjacent to each other.
Fig. 11 is a diagram showing cells adjacent to each other in a comparative example, in which identical time slot numbers are allocated to uplinks and downlinks.
Fig. 12 is a diagram showing a case wherein a mobile station issuing an allocation request for a time slot of a downlink is distant from a mobile station using a time slot of an uplink, in the comparative example.

### DESCRIPTION OF THE PREFERRED EMBODIMENTS

Preferred embodiments of the present invention will be described below with reference to the drawings. The embodiments will describe cases of the IMT-2000 CDMA-TDD scheme, but the present invention can also be applied to other schemes without being limited to it.

### 1.First Embodiment

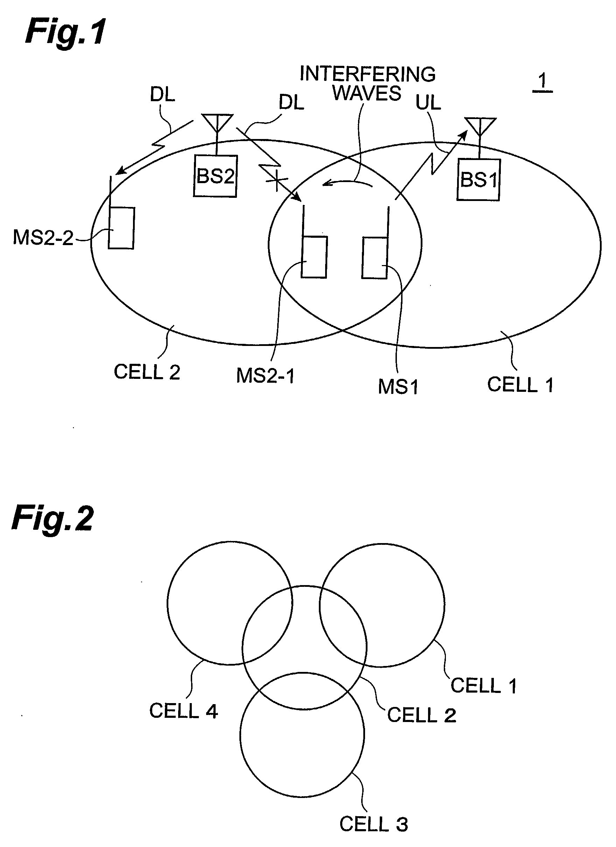

Fig. 1 is a diagram showing the whole of mobile communication system 1 according to the present embodiment. The mobile communication system 1 is placed in cell 1 and cell 2 adjacent thereto. The mobile communication system 1 is provided with a base station BS1 for the cell 1, a time slot allocating unit for the cell 1, not shown, a mobile station MS1 located in the cell 1, a base station BS2 for the cell 2, a time slot allocating unit for the cell 2, not shown, and mobile stations MS2 (MS2-1, MS2-2) located in the cell 2. In the present embodiment the time slot allocating units are placed separately from and independently of the base stations BS, but may be placed in the base stations BS. Besides in the case that the time slot allocating units are placed separately from and independently of the base stations BS, the time slot allocating units may be placed in the radio network controller RNC that collectively controls the plural base stations.

The cell 1 is an example of the first area and the cell 2 an example of the second area. The cells may be replaced by micro cells or sectors. Fig. 2 shows part of cells in the present embodiment, in which a service area is constructed by spreading many cells over the area. Each cell includes a time slot allocating unit for each cell. It is noted that in the present invention the numbers of cells, base stations, and mobile stations are not limited to those in Fig. 1. The adjacent cell may be each cell in a partially overlapping state of two cells, as shown in Fig. 1, or each cell in a partially overlapping state of three or more cells.

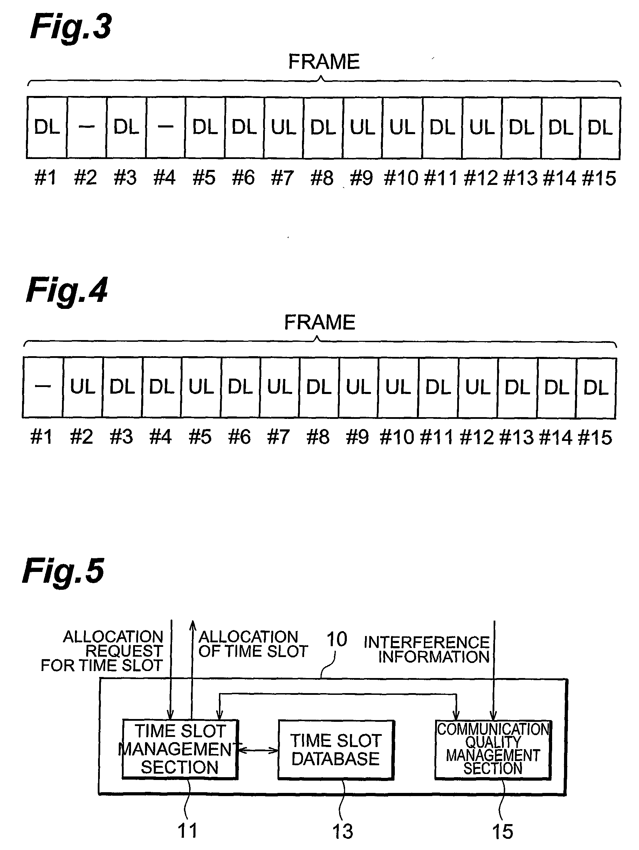

Fig. 3 shows a configuration of an example of a frame allocated to the cell 2 and Fig. 4 a configuration of an example of a frame allocated to the cell 1. Predetermined time slots are allocated to the frames of Fig. 3 and Fig. 4. Positions of the time slots are represented by time slot numbers of #1 to #15. DL represents a time slot allocated to a downlink, and UL a time slot allocated to an uplink. "-" (hyphen) indicates that no time slot is allocated. Since the present embodiment is of the CDMA scheme, a time slot can be allocated to plural users by spreading with a plurality of different spreading codes in each time slot.

Fig. 5 is a block diagram of the time slot allocating unit in the first embodiment. The time slot allocating unit 10 is placed separately from the base station BS2 in the cell 2. The time slot allocating apparatus placed in the other cells also has the structure similar to that of the time slot allocating unit 10.

The time slot allocating unit 10 is provided with a time slot management section 11, a time slot database 13, and a communication quality management section 15. The time slot management section 11 manages the time slots of the mobile stations MS2 in the cell 2, e.g., those of the mobile stations MS2-1, MS2-2. In the following description, the mobile stations MS2-1, MS2-2 are collectively described as "mobile station MS2". For example, the time slot management section 11 performs a process of allocating a time slot to a mobile station MS2, based on a time slot allocation request from the mobile station MS2. The time slot database 13 stores time slot data. For example, when the time slot management section 11 accepts an allocation request for a time slot, the time slot management section 11 consults the time slot data in the time slot database 13 to search for an available spreading code in the time slot requested by the allocation request. If there is one the time slot management section 11 allocates it to the mobile station MS2. The communication quality management section 15 is informed, for example, of information necessary for a judgment on the deterioration of quality of communications, e.g., interference information by the mobile station MS2. When the mobile station MS2 measures the power of interfering waves and results in judging that the interference level such as the interference power or the like is high enough to cause trouble in communications, it informs the communication quality management section 15 of the interference information. Namely, when the interference level to the mobile station MS2 is high, the interference information is informed of.

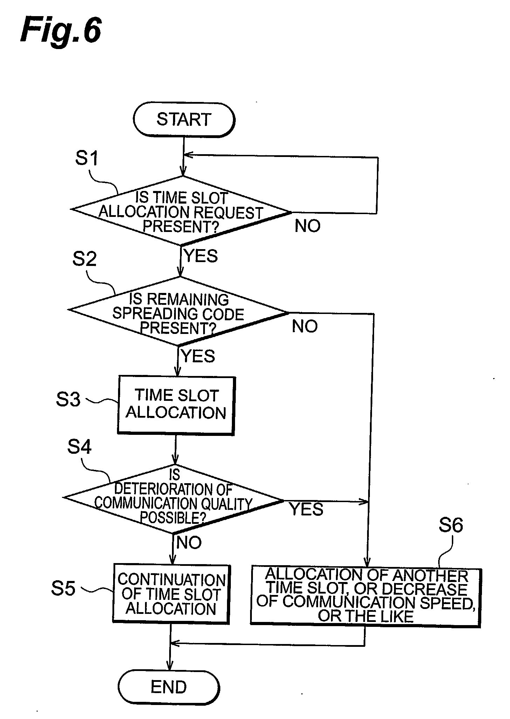

The operation of the first embodiment will be described below using the flowchart of Fig. 6. The operation of the first embodiment starts from a state in which a time slot of an uplink (UL) is allocated to the mobile station MS1 (Fig. 1). It is then determined whether a mobile station MS2 in the cell 2 has issued an allocation request for a time slot of a downlink (DL) having the same time slot number as that of the foregoing uplink, to the time slot allocating unit 10 placed separately from the base station BS2 in the cell 2 (step S1). With no request, the flow returns to step S1. With a request, whether there remains a spreading code in the time slot under the allocation request is determined by consulting the time slot database 13 (step S2). When there remains no spreading code, the flow moves to a process of carrying out allocation of another time slot, decrease of communication speed, or the like (step S6). The time slot allocation state at this time is one wherein a time slot of an uplink is allocated to the cell 1 and no time slot is allocated to the cell 2, as seen at the time slot number #2 shown in Figs. 3 and 4.

When there remains a spreading code on the other hand, the time slot is allocated under that spreading code (step S3). This time slot allocation results in allocating a time slot of an uplink to the cell 1 and allocating a time slot of a downlink to the cell 2, as seen at the time slot number #5 shown in Figs. 3 and 4. Then the mobile station MS2 in the cell 2 determines whether there will occur deterioration of the communication quality, based on the interference information or the like (step S4). If the power of interfering waves is high as at the mobile station MS2-1, the mobile station MS2-1 will suffer trouble in communications. Thus the mobile station MS2-1 informs the communication quality management section 15 of the interference information. The communication quality management section 15 performs the process of requesting the time slot management section 11 to allocate another time slot, decreasing the communication speed, or the like (step S6). If the power of interfering waves is null or low as at the mobile station MS2-2, the mobile station MS2-2 will suffer no trouble in communications. Since the mobile station MS2-2 does not inform the communication quality management section 15 of the interference information, the time slot management section 11 continues the allocation of the time slot to the mobile station MS2-2 (step S5). The present invention does not have to be limited to this, but can also employ any control other than the continuation.

According to the present embodiment, as described above, in the state wherein a time slot of an uplink is allocated to the mobile station MS1, a time slot of a downlink having the same time slot number as that of the foregoing time slot is allocated to the mobile station MS2 without avoiding the allocation. When the communication quality can be deteriorated because of the power of interfering waves or the like, the process of allocating another time slot or the like is performed. When there can occur no deterioration of the communication quality on the other hand, the allocation of the time slot of the downlink is continued. Accordingly, the present embodiment can enhance the frequency efficiency in the cell 1 and cell 2 adjacent to each other.

The present invention can also be applied to a case in which while a time slot of a downlink is allocated to the mobile station MS1, a time slot of an uplink having the same time slot number as that of the foregoing time slot is allocated to the mobile station MS2. In this case, the mobile station MS1 in the cell 1 measures the power of interfering waves from the mobile station MS2 in the cell 2. When the power of interfering waves affecting the mobile station MS1 is high, the mobile station MS1 informs the communication quality management section of the time slot allocating unit in the cell 1 of the interference information. The communication quality management section informs the time slot management section of the time slot allocating unit in the cell 2 of the information. The time slot management section of the time slot allocating unit in the cell 2 performs the process of allocating another time slot to the mobile station MS2 in the cell 2, or the like.

### 2.Second Embodiment

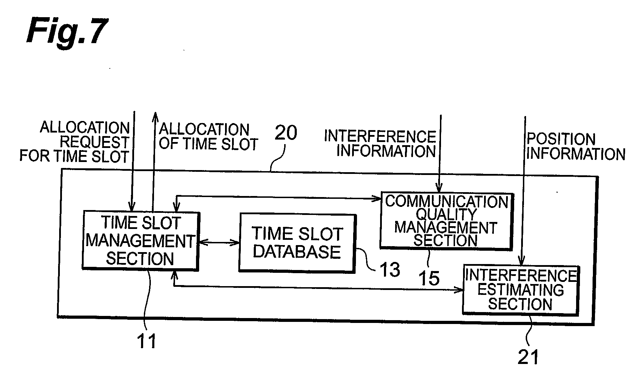

The second embodiment will be described with focus on the difference from the first embodiment. Fig. 7 is a block diagram of the time slot allocating unit 20 in the second embodiment. The same members as those in the configuration of the time slot allocating unit 10 are denoted by the same reference symbols and the description thereof is omitted herein. The second embodiment is different in provision of an interference estimating section 21 from the first embodiment. The interference estimating section 21 estimates the power of interfering waves at the mobile station with a time slot of a downlink being allocated thereto from the mobile station with a time slot of an uplink being allocated thereto out of the mobile station MS1 and the mobile station MS2, from the distance between the mobile station MS1 and the mobile station MS2 shown in Fig. 1. The distance between the mobile station MS1 and the mobile station MS2 is determined based on information from the Global Positioning System GPS or a plurality of base stations BS. Further interference information shown in Fig. 7 is used to decide if the prescribed communication quality is kept with a time slot after the time slot has been allocated. And as the information to decide if a time slot is allocated, the distance between the mobile station MS1 and the mobile station MS2, that is position information in Fig. 7, is used.

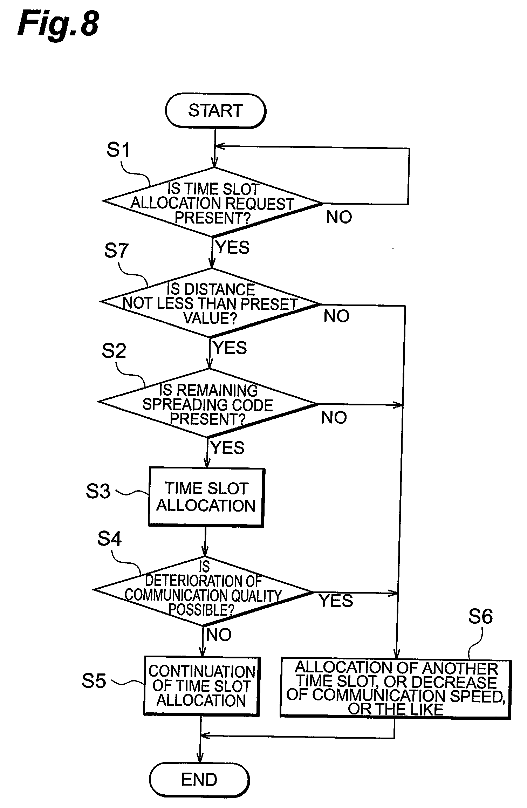

The operation of the second embodiment will be described below using the flowchart of Fig. 8. The same steps as those in the first embodiment are denoted by the same reference symbols and the description thereof is omitted herein. The second embodiment is different from the first embodiment in that step S7 is interposed between step S1 and step S2. Namely, after step 1, the interference estimating section 21 estimates the power of interfering waves at the mobile station MS2 to which a time slot of a downlink is allocated, from the mobile station MS1 to which a time slot of an uplink is allocated, from the distance between the mobile station MS1 and the mobile station MS2. When the distance is not less than a predetermined value (e.g., as at the mobile station MS2-2), it is estimated that the power of interfering waves is null or low. Based on this, it is estimated that there occurs no deterioration of the communication quality, and then the flow proceeds to step S2. On the other hand, when the distance is smaller than the predetermined value (for example, as at the mobile station MS2-1), it is estimated that the power of interfering waves is high. Based on this, it is estimated that there occurs deterioration of the communication quality, and then the flow proceeds to step S6.

According to the second embodiment, the deterioration of the communication quality is estimated based on the estimation of the interference level and whether the time slot of the downlink is allocated to the mobile station MS2 is determined based thereon. When it is estimated that the interference level is low or there occurs no interference, the time slot of the downlink is allocated to the mobile station MS2. When it is estimated that the interference level is high, the time slot of the downlink is not allocated to the mobile station MS2. Therefore, the second embodiment can prevent fruitless allocation of the time slot of the downlink. It is noted that the physical quantity used for the estimation of the interference level is not limited to the power of interfering waves.

The second embodiment can also be applied to the case wherein while a time slot of a downlink is allocated to the mobile station MS1, there arises an allocation request for a time slot of an uplink at the mobile station MS2.

According to the present invention, in the state wherein a time slot of an up(down)link is allocated to the first mobile station, a time slot of a down(up)link having the same time slot number as that of the time slot is allocated to the second mobile station without avoiding the allocation. Accordingly, the link utilization efficiency can be increased among the adjacent areas.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A time slot allocating apparatus in a scheme applying a common frequency band to up/downlinks and using the frequency band in a first area and a second area, the time slot allocating apparatus being located in respective areas, the apparatus comprising:
means for, when in the first area and the second area either one link of the up/downlinks is allocated to a first mobile station in the first area, allocating the other link having a time slot number equal to that of a time slot allocated to the first mobile station and being different from the link of the first mobile station, to a second mobile station in the second area.

2. The time slot allocating apparatus according to claim 1, further comprising:
means for accepting an allocation request to the second mobile station in the second area when either one of the up/downlinks is allocated to the first mobile station in the first area,
wherein allocating means to the second mobile station allocates a second time slot to the second mobile station, based on information of positions of the first mobile station and the second mobile station.

3. A time slot allocating method in a scheme applying a common frequency band to up/downlinks and using the frequency band in a first area and a second area, the time slot allocating method comprising:
a step of, when in the first area and the second area either one link of the up/downlinks is allocated to a first mobile station in the first area, allocating the other link having a time slot number equal to that of a time slot allocated to the first mobile station and being different from the link of the first mobile station, to a second mobile station in the second area.

4. The time slot allocating method according to claim 3, further comprising:
a step of accepting an allocation request to the second mobile station in the second area when either one of the up/downlinks is allocated to the first mobile station in the first area,
wherein allocating step to the second mobile station allocates a second time slot to the second mobile station, based on information of positions of the first mobile station and the second mobile station.

5. A computer-readable memory storing a program, the program is used in a computer of time slot allocating apparatus in a scheme applying a common frequency band to up/downlinks and using the frequency band in a first area and a second area, the time slot allocating apparatus being located in the first area and the second area,
the program being configured to make the computer function as means for, when in the first area and the second area either one link of the up/downlinks is allocated to a first mobile station in the first area, allocating the other link having a time slot number equal to that of a time slot allocated to the first mobile station and being different from the link of the first mobile station, to a second mobile station in the second area.

6. The computer-readable memory according to claim 5, wherein the program is further made to function as means for accepting an allocation request to the second mobile station in the second area when either one of the up/downlinks is allocated to the first mobile station in the first area,
wherein the computer is made to function so that allocating means to the second mobile station allocates a second time slot to the second mobile station, based on information of positions of the first mobile station and the second mobile station.

7. A program used in a computer of time slot allocating apparatus in a scheme applying a common frequency band to up/downlinks and using the frequency band in a first area and a second area, the time slot allocating apparatus being located in the first area and the second area,
the program being configured to make the computer function as means for, when in the first area and the second area either one link of the up/downlinks is allocated to a first mobile station in the first area, allocating the other link having a time slot number equal to that of a time slot allocated to the first mobile station and being different from the link of the first mobile station, to a second mobile station in the second area.

8. The program according to claim 7, wherein the computer is further made to function as means for accepting an allocation request to the second mobile station in the second area when either one of the up/downlinks is allocated to the first mobile station in the first area,
wherein the computer is made to function so that allocating means to the second mobile station allocates a second time slot to the second mobile station, based on information of positions of the first mobile station and the second mobile station.

9. A mobile communication system applying a common frequency band to up/downlinks and using the frequency band in a first area for a first mobile station to be located and a second area for a second mobile station to be located and which comprises:
a first time slot allocating unit for the first area; and
a second time slot allocating unit for the second area,
wherein the first time slot allocating unit comprises means for allocating a first time slot of either one of the up/downlinks to the first mobile station, and
wherein the second time slot allocating unit comprises means for allocating a second time slot of the other link having a time slot number equal to that of the first time slot and being different from the link allocated to the first mobile station, to the second mobile station.

10. The mobile communication system according to claim 9, wherein the second time slot allocating unit further comprises:
means for accepting an allocation request to the second mobile station in the second area when either one of the up/downlinks is allocated to the first mobile station in the first area,
wherein allocating means allocates the second time slot to the second mobile station, based on information of positions of the first mobile station and the second mobile station.

11. A computer-readable memory storing a program, the program is used in a computer of a mobile communication system applying a common frequency band to up/downlinks and using the frequency band in a first area for a first mobile station to be located and a second area for a second mobile station to be located and which comprises:
a first time slot allocating unit for the first area; a second time slot allocating unit for the second area, and
wherein the first time slot allocating unit is made to function as means for allocating a first time slot of either one of the up/downlinks to the first mobile station, and
wherein the second time slot allocating unit is made to function as second time slot allocating means for allocating a second time slot of the other link having a time slot number equal to that of the first time slot and being different from the link allocated to the first mobile station, to the second mobile station.

12. The computer-readable memory according to claim 11, wherein the program is made to function as means for accepting an allocation request to the second mobile station in the second area when either one of the up/downlinks is allocated to the first mobile station in the first area,
wherein the second time slot allocating means is made to function to allocate the second time slot to the second mobile station, based on information of positions of the first mobile station and the second mobile station.

13. A program used in a computer of a mobile communication system applying a common frequency band to up/downlinks and using the frequency band in the first area for a first mobile station to be located and a second area for a second mobile station to be located and which comprises:
a first time slot allocating unit for the first area; a second time slot allocating unit for the second area, and
wherein the first time slot allocating unit is made to function as means for allocating a first time slot of either one of the up/downlinks to the first mobile station, and
wherein the second time slot allocating unit is made to function as second time slot allocating means for allocating a second time slot of the other link having a time slot number equal to that of the first time slot and being different from the link allocated to the first mobile station, to the second mobile station.

14. The program according to claim 13, wherein the second time slot allocating unit is made to function as means for accepting an allocation request to the second mobile station in the second area when either one of the up/downlinks is allocated to the first mobile station in the first area,
wherein the second time slot allocating means is made to function to allocate the second time slot to the second mobile station, based on information of positions of the first mobile station and the second mobile station.

15. A method of operating a mobile communication system in a scheme applying a common frequency band to up/downlinks and using the frequency band in a first area and a second area, the method comprising:
a step of, when in the first area and the second area either one link of the up/downlinks is allocated to a first mobile station in the first area, allocating the other link having a time slot number equal to that of a time slot allocated to the first mobile station and being different from the link of the first mobile station, to a second mobile station in the second area.

16. The operating method according to claim 15, further comprising:
a step of accepting an allocation request to the second mobile station in the second area when either one of the up/downlinks is allocated to the first mobile station in the first area,
wherein allocating step to the second mobile station, a second time slot is allocated to the second mobile station, based on information of positions of the first mobile station and the second mobile station.

17. A time slot allocating apparatus applying a common frequency band to up/downlinks, the apparatus comprising:
means for, when either one link of the up/downlinks is allocated to a first mobile station, allocating the other link having a time slot number equal to that of a time slot allocated to the first mobile station and being different from the link of the first mobile station, to a second mobile station.

18. The time slot allocating apparatus according to claim 17, further comprising:
means for accepting an allocation request to the second mobile station when either one of the up/downlinks is allocated to the first mobile station,
wherein allocating means to the second mobile station allocates a second time slot to the second mobile station, based on information of positions of the first mobile station and the second mobile station.
